# EUROPEAN PATENT APPLICATION

(11) **EP 4 597 311 A1**
(43) Date of publication of application: **06.08.2025**
(21) Application number: 23869824.5
(22) Date of filing: 29.06.2023
(51) Int. Cl.: G06F 9/445

(54) **SOFTWARE CONFIGURATION METHOD AND APPARATUS**

(30) Priority: 29.09.2022 CN 202211204023
(71) Applicant: Shenzhen Yinwang Intelligent Technologies Co., Ltd., Shenzhen, Guangdong 518129 (CN)
(72) Inventor: TONG, Xu, Shenzhen, Guangdong 518129 (CN); ZHOU, Shijun, Shenzhen, Guangdong 518129 (CN); LIU, Zhiyuan, Shenzhen, Guangdong 518129 (CN)
(74) Representative: Maiwald GmbH
(86) International application number: PCT/CN2023/103851
(87) International publication number: WO 2024/066576

(57) **Abstract**

This application provides a software configuration method and apparatus. The method includes: obtaining a software behavior model; determining first preview code based on the software behavior model, where a first symbol of the first preview code corresponds to a first model element of the software behavior model; determining first configuration information in response to a first operation for the first symbol; and generating target language code based on the first configuration information. The method in this application is different from conventional form-based configuration in that preview code can be displayed before automatic code generation, so that a user can quickly locate a problem point based on the preview code to configure the problem point. This helps improve configuration efficiency in a code generation process to further improve code generation efficiency, and helps reduce a configuration threshold of a code generation tool to improve user experience.

## Description

This application claims priority to Chinese Patent Application No. 202211204023.5, filed with the China National Intellectual Property Administration on September 29, 2022 and entitled "SOFTWARE CONFIGURATION METHOD AND APPARATUS", which is incorporated herein by reference in its entirety.

### TECHNICAL FIELD

This application relates to the field of code management technologies, and more specifically, to a software configuration method and apparatus.

### BACKGROUND

Automatic code generation technologies play an increasingly important role in software engineering. In particular, an automatic code generation method that is based on model based design (Model Based Design, MBD) becomes dominant. MBD is different from a conventional document-based embedded system development mode in that MBD uses modular modeling to implement automatic code generation, greatly reducing labor and time in manual coding and testing phases.

In an automatic code generation procedure, a user needs to configure generated code in various aspects to meet requirements of different integration scenarios. To support diverse integration scenarios, a large quantity of configuration options are provided, and each configuration option is accompanied by text describing a function of the configuration option. However, it is still difficult for the user to understand functions of the configuration options through description text. The user needs to learn and accumulate experience for a long time to find a required configuration option. As a result, it is difficult for the user to configure and generate a desired code program in a short time.

In view of this, a solution that can help the user quickly complete configuration in the automatic code generation procedure needs to be developed urgently.

### SUMMARY

Embodiments of this application provide a software configuration method and apparatus. In this way, preview code can be generated and displayed before target language code is generated, so that a user quickly completes configuration. This improves code generation efficiency and can reduce costs for the user to learn code configuration, to help improve user experience.

According to a first aspect, a software configuration method is provided. The method includes: obtaining a software behavior model; determining first preview code based on the software behavior model, where a first symbol of the first preview code corresponds to a first model element of the software behavior model; determining first configuration information in response to a first operation for the first symbol; and generating target language code based on the first configuration information.

In the foregoing technical solution, after the first preview code is determined, the first preview code is displayed in a preview window, so that a user directly performs an operation on the first preview code, to complete configuration in various aspects required for generating the target language code. This helps improve code generation efficiency. The user can quickly locate a problem point by using the first preview code and reconfigure the problem point. This helps reduce a configuration threshold of a code generation tool and improve user experience. In addition, different from a current technical solution, this technical solution supports configuration modification of a single model symbol, so that impact on another element of a same type can be avoided.

For example, the first model element is a basic construction unit of the model, for example, may be a port, a parameter, or the like in the model.

For example, the first symbol is a code symbol, and the first symbol may be a declaration such as a function, a variable, or a type.

It should be noted that the foregoing "corresponds to" may be understood as: The first symbol establishes a correspondence with the first model element by using a model symbol. The model symbol is predefined based on the software behavior model, a first model symbol is determined based on the first model element, and the first symbol is in a one-to-one correspondence with a predefined first model symbol. Modification of the first symbol may be applied to a configuration file of the first model symbol. The first configuration information may be determined based on the configuration file, to configure code generated based on the first model element.

With reference to the first aspect, in some implementations of the first aspect, the first operation includes at least one of the following: modifying a name of the first symbol; modifying a modifier of the first symbol; modifying a storage location of the first symbol; and inserting user-defined content before and/or after the first symbol.

In some possible implementations, the inserting user-defined content before and/or after the first symbol may include: inserting the user-defined content in a section in which the first symbol is located, for example, inserting the user-defined content before a row in which the first symbol is located, or inserting the user-defined content after the row in which the first symbol is located. Alternatively, the user-defined content is inserted before or after the section in which the first symbol is located. If the user-defined content is inserted before the section in which the first symbol is located, the first symbol may be a symbol in a first row of the section. If the user-defined content is inserted after the section in which the first symbol is located, the first symbol may be a symbol in a last row of the section. For example, the "section" may include a reference section, a macro definition section, a record declarations section, a global variable section, a function section, or the like, or may include a section of another type.

With reference to the first aspect, in some implementations of the first aspect, the method further includes: controlling, in response to a second operation for the first symbol, to display a correspondence between the first symbol and the first model element.

For example, the second operation may be moving a mouse to the first symbol, or the second operation may be moving the mouse to the first symbol and clicking a left button, or the second operation may be another operation.

For example, when the second operation is detected, the correspondence between the first symbol and the first model element may be reflected in a manner of highlighting the first model element, may be reflected in a manner of highlighting the first model element and a model in which the first model element is located, or may be reflected in another manner.

In the foregoing technical solution, the correspondence between the first symbol and the first model element is displayed, to help the user quickly determine a model element that needs to be configured. In this way, configuration efficiency is improved, so that code generation efficiency is improved.

With reference to the first aspect, in some implementations of the first aspect, the method further includes: controlling, in response to a third operation for the first symbol, to display information of the first symbol.

For example, the third operation may be moving the mouse to the first symbol and clicking a right button, or the third operation may be another operation.

For example, the information of the first symbol may include a type, a source, a function (or referred to as a purpose), a generation manner, or the like of the first symbol.

In the foregoing technical solution, the information of the first symbol is displayed, to help the user understand a meaning of preview code, so that configuration is quickly completed.

With reference to the first aspect, in some implementations of the first aspect, the method further includes: generating a second symbol in response to the first operation; and controlling to display second preview code, and the second preview code includes the second symbol.

For example, the first operation is modifying the name of the first symbol, for example, modifying the name of the first symbol from "model_io" to "g_io". In this case, the second symbol "g_io" is generated in response to the first operation, and all locations that refer to the first symbol in the original first preview code are updated to the second symbol, to generate the second preview code and display the second preview code.

It should be understood that the second symbol generated after the first symbol is modified also corresponds to the first model element.

In the foregoing technical solution, after the user performs reconfiguration for the problem point, the preview code can be refreshed in real time, so that the user intuitively experiences configuration effect. This helps resolve a problem that configuration of the code generation tool is not intuitive.

With reference to the first aspect, in some implementations of the first aspect, the first preview code includes placeholder code, and the placeholder code represents a logical operation.

For example, the placeholder code may be a placeholder, or may be pseudocode, or may be placeholder code in another form.

In the foregoing technical solution, the placeholder code represents a logical operation that does not need to be configured. This helps shorten a parsing time, to shorten a generation time of the first preview code, so that configuration efficiency and code generation efficiency are improved.

With reference to the first aspect, in some implementations of the first aspect, the determining first preview code based on the software behavior model includes: determining a model symbol based on the software behavior model, where the model symbol includes a first model symbol, and the first model symbol is determined based on the first model element; and determining the first preview code based on the model symbol and second configuration information of the software behavior model.

For example, the second configuration information may be included in a basic configuration file of the software behavior model. The basic configuration file may be a default configuration file of the software behavior model in a system, or may be another configuration file. The basic configuration file may include basic configuration information of each type of model element, and a naming rule that is specified for each type of element based on a type of the model element, for example, "element name + type suffix".

In the foregoing technical solution, the model symbol may be determined based on the software behavior model, and then a correspondence between the model element and a symbol in preview code is constructed by using the model symbol as a "bridge", so that configuration of code generated based on the model element is implemented through modifying the symbol in the preview code by the user.

With reference to the first aspect, in some implementations of the first aspect, the second configuration information includes first sub-configuration information of the first model symbol, and the determining first configuration information in response to a first operation for the first symbol includes: updating the first sub-configuration information to second sub-configuration information based on the first operation; and determining the first configuration information based on the second sub-configuration information.

For example, the first sub-configuration information may include a name and a storage location of a code symbol corresponding to the first model symbol, or may further include information such as a modifier, an annotation, and user-defined content of the code symbol corresponding to the first model symbol.

It should be understood that, after the first operation is detected, information in the first sub-configuration information is correspondingly modified to the second sub-configuration information. For example, in response to the first operation, one or more of a name, a storage location, a modifier, an annotation, and user-defined content in the first sub-configuration information is changed, so that the first sub-configuration information is changed to the second sub-configuration information.

In the foregoing technical solution, configuration of a single model symbol is modified by using the first sub-configuration information, so that impact on another element of a same type can be avoided. This helps improve configuration efficiency.

According to a second aspect, a software configuration apparatus is provided. The software configuration apparatus includes: an obtaining unit, configured to obtain a software behavior model; a first processing unit, configured to: determine first preview code based on the software behavior model, where a first symbol of the first preview code corresponds to a first model element of the software behavior model; and determine first configuration information in response to a first operation for the first symbol; and a second processing unit, configured to generate target language code based on the first configuration information.

With reference to the second aspect, in some implementations of the second aspect, the first operation includes at least one of the following: modifying a name of the first symbol; modifying a modifier of the first symbol; modifying a storage location of the first symbol; and inserting user-defined content before and/or after the first symbol.

With reference to the second aspect, in some implementations of the second aspect, the first processing unit is further configured to: control, in response to a second operation for the first symbol, to display a correspondence between the first symbol and the first model element.

With reference to the second aspect, in some implementations of the second aspect, the first processing unit is further configured to: control, in response to a third operation for the first symbol, to display information of the first symbol.

With reference to the second aspect, in some implementations of the second aspect, the first processing unit is further configured to: generate a second symbol in response to the first operation; and control to display second preview code, and the second preview code includes the second symbol.

With reference to the second aspect, in some implementations of the second aspect, the first preview code includes placeholder code, and the placeholder code represents a logical operation.

With reference to the second aspect, in some implementations of the second aspect, the first processing unit is configured to: determine a model symbol based on the software behavior model, where the model symbol includes a first model symbol, and the first model symbol is determined based on the first model element; and determine the first preview code based on the model symbol and second configuration information of the software behavior model.

With reference to the second aspect, in some implementations of the second aspect, the second configuration information includes first sub-configuration information of the first model symbol, and the first processing unit is further configured to: update the first sub-configuration information to second sub-configuration information based on the first operation; and determine the first configuration information based on the second sub-configuration information.

According to a third aspect, a software configuration apparatus is provided. The apparatus includes: a memory, configured to store a computer program; and a processor, configured to execute the computer program stored in the memory, to enable the apparatus to perform the method according to any one of the possible implementations of the first aspect.

According to a fourth aspect, an electronic device is provided. The electronic device includes the apparatus according to any one of the possible implementations of the second aspect or the third aspect.

According to a fifth aspect, a computer program product is provided. The computer program product includes computer program code, and when the computer program code is run on a computer, the computer is enabled to perform the method according to any one of the possible implementations of the first aspect.

It should be noted that all or some of the computer program code may be stored in a first storage medium. The first storage medium may be encapsulated together with a processor, or may be encapsulated separately from a processor.

According to a sixth aspect, a computer-readable medium is provided. The computer-readable medium stores instructions, and when the instructions are executed by a processor, the processor is enabled to implement the method according to any one of the possible implementations of the first aspect.

According to a seventh aspect, a chip is provided. The chip includes a circuit, and the circuit is configured to perform the method according to any one of the possible implementations of the first aspect.

### BRIEF DESCRIPTION OF DRAWINGS

FIG. 1 is a schematic flowchart of an MBD-based automatic code generation process;
FIG. 2 is a block diagram of a system architecture of software configuration according to an embodiment of this application;
FIG. 3 is a block diagram of a code preview window according to an embodiment of this application;
FIG. 4 is a schematic flowchart of a software configuration method according to an embodiment of this application;
FIG. 5 is a diagram of a software behavior model according to an embodiment of this application;
FIG. 6 is a diagram of a model symbol definition table according to an embodiment of this application;
FIG. 7 is a diagram of a configuration file according to an embodiment of this application;
FIG. 8 is a block diagram of another code preview window according to an embodiment of this application;
FIG. 9 is a block diagram of a code preview window after configuration modification according to an embodiment of this application;
FIG. 10 is a diagram of a configuration file after configuration modification according to an embodiment of this application;
FIG. 11 is a block diagram of a code preview window after configuration modification according to an embodiment of this application;
FIG. 12 is a block diagram of a software configuration apparatus according to an embodiment of this application; and
FIG. 13 is a block diagram of a software configuration apparatus according to an embodiment of this application.

### DESCRIPTION OF EMBODIMENTS

In the descriptions of embodiments of this application, "/" means "or" unless otherwise specified. For example, A/B may represent A or B. In this specification, "and/or" describes an association relationship between associated objects and represents that three relationships may exist. For example, A and/or B may represent the following three cases. Only A exists, both A and B exist, and only B exists. In this application, "at least one" means one or more, and "a plurality of" means two or more. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In embodiments of this application, prefixes such as "first" and "second" are used only to distinguish different described objects, and do not limit a location, a sequence, a priority, a quantity, or content of described objects. In embodiments of this application, use of a prefix word, for example, an ordinal number, used to distinguish between described objects does not constitute a limitation on the described objects. For descriptions of the described objects, refer to the descriptions of the context in the claims or embodiments. Use of such a prefix word should not constitute a redundant limitation.

Before the solutions of this application are described, concepts in embodiments of this application are first described.
1. Embedded system: The embedded system usually includes four parts: an embedded microprocessor, a peripheral hardware device, an embedded operating system, and an application, and is used to control, monitor, or manage another device.
2. Embedded software: The embedded software is software designed based on the embedded system, usually includes an operating system and development tool software that are embedded in hardware, is formed by a program and a document of the program, and is an important part of the embedded system.
3. MBD: Based on a function and a principle of a component, a tool of model based design is used to establish a model in a graphical or formal text manner, to verify correctness of the model through simulation. Finally, target language code is automatically generated, and then the target language code is deployed in a target device. In an automatic code generation technology based on MBD, code visualization and traceability between a requirement document and the model greatly facilitate communication and review processes between engineers, so that efficiency of software development is improved.
4. Software behavior modeling: Software behavior is a software running performance form and status evolution process. Software behavior modeling is a process of establishing, according to some modeling methods, a model that represents software behavior (or referred to as a software behavior model, sometimes referred to as a model for short in the following).
5. Target language code: is language code generated based on the software behavior model, and may be directly deployed in a target device (for example, a chip), so that the target device executes the target language code, verifies a function that can be implemented by the target language code, or completes a related test. A language used by the code may be specified by a user, for example, the C language or the C++ language.
6. Integration scenario: is a target running environment of the target language code. For example, the target running environment may be a development framework based on the embedded system.
7. What you see is what you get: In this application, "what you see is what you get" means that pre-generated target language code is configured based on the target language code that needs to be generated, and is refreshed in real time after configuration, so that the user knows effect of configuration.
8. Model element: is a basic construction unit of a model, such as a port or a parameter. In this application, some model elements, such as ports and parameters, used for code generation are abstractly defined as model symbols. One model component includes one or more model elements.
9. Symbol: is a definition that can be referenced during code compilation, for example, declarations such as a function, variable, and type. In this application, the symbol includes a code symbol and a model symbol. The code symbol is an identifier referenced in target language code or preview code. The model symbol may directly participate in calculation and optimization in intermediate code, and can be dynamically converted into a definition and reference of the code symbol when the target language code is generated. The model symbol is not displayed to a user.

The following describes technical solutions of embodiments in this application with reference to the accompanying drawings.

In recent years, an automatic code generation technology based on model based design develops rapidly. Various software tools based on model based design constantly emerge, involving aspects such as model design, simulation, analysis, and verification. Automatic code generation technologies play an increasingly important role in software engineering, and deeply change evolution and transformation of a software development process. An MBD-based automatic code generation technology is widely used. MBD is different from a conventional document-based embedded system development mode in that modular modeling is used to implement automatic code generation, which greatly reduces labor and time in manual coding and testing phases.

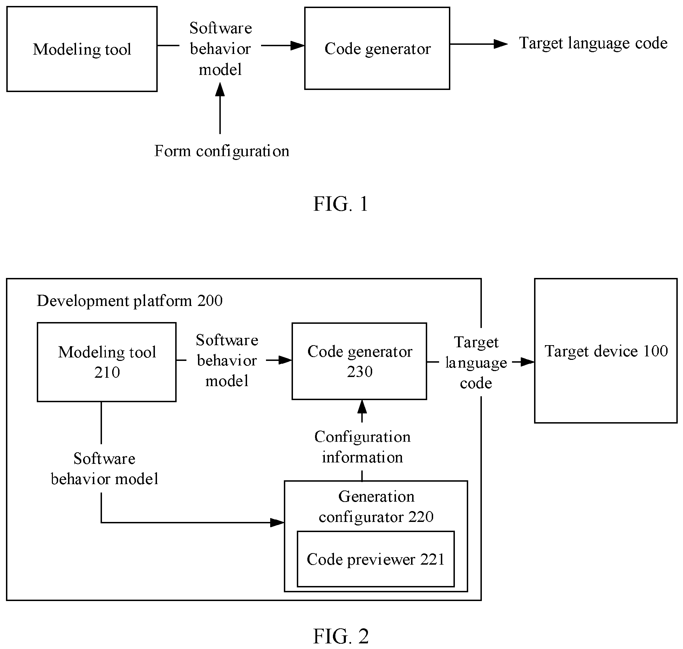

As described above, in the automatic code generation procedure, the user needs to configure generated code in various aspects to meet requirements of different target integration scenarios. FIG. 1 is a schematic flowchart of an MBD-based automatic code generation process. In the procedure shown in FIG. 1, a form-based software configuration method is used to configure pre-generated target language code. For example, that a user establishes a software behavior model by using a modeling tool after analyzing software behavior, and then configures details of the pre-generated target language code one by one by using a form includes but is not limited to: embedding user-defined content into the pre-generated target language code, adjusting storage locations of some variables in the pre-generated target language code, and customizing names of some identifiers in the pre-generated target language code. Further, a code generator learns a configuration detail by reading the form, and then generates corresponding target language code based on the configuration detail and the software behavior model.

Although the foregoing solution can implement customized code configuration, the following disadvantages exist: First, a large quantity of configuration options are provided in the form to support diversified integration scenarios. As a result, it is difficult for the user to understand functions of the configuration options by using description text of the configuration options. Second, after each configuration is completed, the user can obtain through comparison a difference between target language code before and after configuration only after the target language code is generated, and cannot perceive actual configuration effect in real time. Third, in a design of the configuration options, a type of element is usually used as a basic unit for taking effect. For example, all ports or all parameters are used as one basic unit for taking effect, and configuration of a specific element in the model cannot be supported. Due to the foregoing disadvantages, the user needs to learn and accumulate experience for a long time, to locate a required configuration option, and each configuration takes a relatively long time, resulting in poor user experience.

In view of this, embodiments of this application provide a software configuration method and apparatus, to display preview code to a user before target language code is generated, so that the user quickly locates a problem point based on the preview code, and performs configuration and/or configuration modification. In addition, after configuration, code is refreshed in real time in a code previewer, so that the user can know effect of the configuration.

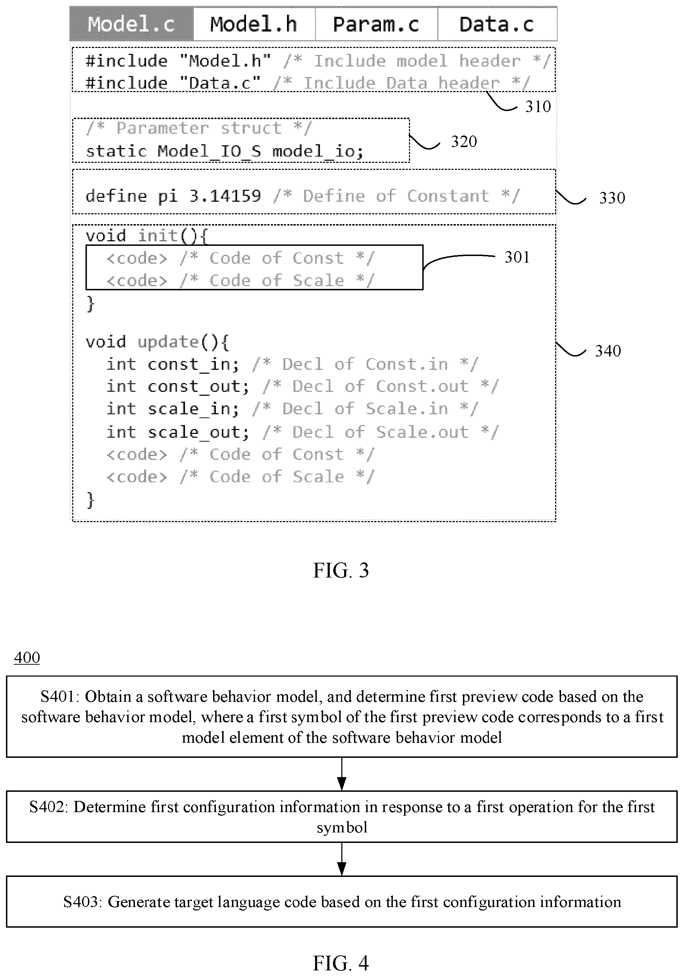

FIG. 2 is a block diagram of a system architecture required for implementing a software configuration method according to an embodiment of this application. For example, the system includes a development platform 200 and a target device 100, and target language code generated by the development platform 200 may be deployed in the target device 100. The development platform 200 may include a modeling tool 210, a generation configurator 220, and a code generator 230. Specifically, the modeling tool 210 may generate a software behavior model based on software behavior. For example, the software behavior may be behavior of vehicle control software, for example, behavior of a BMS management system software or behavior of a motor control software. This is not specifically limited in this embodiment of this application. The generation configurator 220 precompiles the software behavior model based on a basic configuration file, and then displays preview code obtained through precompilation by using a code previewer 221. As shown in FIG. 3, the preview code includes files (such as Model.c, Model.h, Param.c, and Data.c) to be generated, a programming structure of the files, declarations of various variables, and the like. A complex logical operation in the process may be presented by using a selected placeholder and pseudocode (as shown in block 301), to prevent a parsing time for being excessively long. The basic configuration file may be a default configuration file of the software behavior model in a system, or may be another configuration file. The basic configuration file may include configuration information of each type of model element, for example, information of a port type model element or a parameter type model element, and a naming rule that is specified for each type of element based on a type of model element, for example, "element name + type suffix". A user may browse the preview code by using the code previewer 221, so that a configuration that does not meet a requirement can be quickly found. Further, the code previewer 221 may modify the configuration in response to an operation of the user, and update and display the preview code after configuration modification. When receiving a configuration completion instruction, the generation configurator 220 sends configuration information to the code generator 230, so that the code generator 230 generates target language code based on the configuration information and the software behavior model. In some possible implementations, after a problem is found during a test performed in the target device 100, the problem may be fed back to the development platform 200, so that a developer modifies the software behavior model and configuration information based on a found specific problem, to ensure correctness of the model and consistency of code and the model. For example, the target device 100 may be a chip, for example, may be a chip in a computing platform of a vehicle, or may be another device.

FIG. 4 is a schematic flowchart of a software configuration method 400 according to an embodiment of this application. The method 400 may be applied to the system architecture shown in FIG. 2. For example, the method 400 may be performed by the generation configurator 220 and the code generator 230 in FIG. 2. The method 400 may include the following steps.

S401: Obtain a software behavior model, and determine first preview code based on the software behavior model, where a first symbol of the first preview code corresponds to a first model element of the software behavior model.

For example, the software behavior model may be obtained through modeling based on a software running performance form and status evolution process.

For example, "determining the first preview code based on the software behavior model" may include: generating the first preview code based on the software behavior model and a basic configuration file of the software behavior model. Further, the first preview code is displayed in a preview window by using a code previewer. Specifically, a model symbol required in an automatic code generation process may be generated based on the software behavior model; a model element in the software behavior model is mapped to the model symbol based on the basic configuration file, to generate the first preview code; and the first preview code is controlled to be displayed. It should be noted that a mapping relationship between the model element and the model symbol is predefined. Because the basic configuration file includes configuration information of each type of model element and a naming rule for each type of model element during code generation, the first preview code may be generated based on the basic configuration file and the mapping relationship between the model element and the model symbol.

Further, a current configuration file may be generated based on the basic configuration file of the software behavior model. The current configuration file may include a name and a storage location of a code symbol corresponding to the model symbol, or may further include a modifier, an annotation, and user-defined content of the code symbol corresponding to the model symbol. The user-defined content may be code (or referred to as a preceding statement) inserted before a line in which the first symbol is located, or may be code (or referred to as a following statement) inserted after the line in which the first symbol is located.

For example, the first preview code may be shown in FIG. 3. There is a correspondence (or referred to as a mapping relationship) between a code symbol such as model_io or const_in in the first preview code and the model element in the software behavior model. In other words, there is a correspondence among the code symbol, the model symbol, and the current configuration file.

It should be noted that code symbols (including the first symbol) in the first preview code are in a one-to-one correspondence with predefined model symbols, and modification of the code symbol in the first preview code may be applied to a configuration file of a related model symbol, to implement configuration of code generated based on a model element mapped to the model symbol.

In some possible implementations, in response to an operation of a user, a correspondence between the first symbol in the first preview code and the first model element may be further displayed, to help the user quickly determine a model element that needs to be configured. The correspondence between the first symbol and the first model element may be determined based on a correspondence between the model symbol and the model element. For example, the first symbol is the code symbol "const_in". When the user moves a mouse to the code symbol "const_in", or the user points the mouse to the code symbol "const_in" and clicks a left button, in the software behavior model displayed in the model window, a model element corresponding to the code symbol "const_in" may be highlighted.

In some possible implementations, in response to an operation of the user, detailed information of the first symbol in the first preview code, for example, a type, a source, a function (or referred to as a purpose), and a generation manner of the first symbol, may be further displayed, to help the user understand a meaning of the preview code. The detailed information of the first symbol may be determined based on detailed information that is of the model symbol and that is defined when the model symbol is generated. For example, the first symbol is a code symbol "init()". When the user points the mouse to the code symbol "init()" and clicks a right button, the following information may be displayed: "function category: main initialization function; function performance: initializing a status variable; function generation manner: fixed generation by a system".

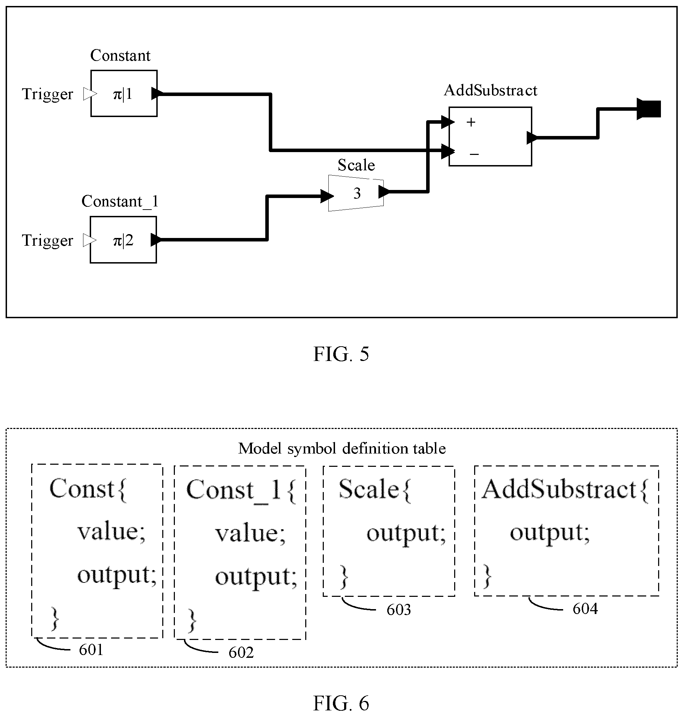

The following uses an example to describe a method for generating the model symbol and the current configuration file with reference to FIG. 5 to FIG. 7.

For example, the model symbol required in the automatic code generation process may be predefined in a memory. The model symbol is associated with a model component. One model symbol may correspond to one model element in the model component, or one model symbol may correspond to one model component. FIG. 5 is a diagram of a software behavior model according to an embodiment of this application. A model component Constant includes model elements Const.Value (a parameter) and Const.Output (a port), and model symbols a and b may be separately predefined in the memory to represent the model elements Const.Value and Const.Output. In an example, a definition table of model symbols respectively corresponding to model components Constant, Constant_1, Scale, and AddSubstract shown in FIG. 5 is shown in FIG. 6. 601 is a model symbol Const corresponding to the model component Constant, and includes a model symbol const_value corresponding to the model element Const.Value, and a model symbol const_output corresponding to the model element Const.Output. 602 is a model symbol Const_1 corresponding to the model component Constant_1, and includes a model symbol const_1_value corresponding to a model element Const_1.Value, and a model symbol const_1_output corresponding to a model element Const_1.Output. 603 is a model symbol Scale corresponding to the model component Scale, and includes a model symbol scale_output corresponding to a model element Scale. Output. 604 is a model symbol AddSubstract corresponding to the model component AddSubstract, and includes a model symbol addsub_output corresponding to a model element AddSubstract. Output.

In some possible implementations, a related description of the model symbol, for example, a category, a source, a function, or a generation manner, may be further predefined in the memory. For example, for the model symbol const_value, a category of the model symbol const_value may be predefined as "component parameter variable", and a source of the model symbol const_value may be predefined as "Const.Value". For the model symbol scale_output, a category of the model symbol scale_output may be predefined as "component port variable", and a source of the model symbol scale_output may be predefined as "Scale.Output". For the model symbol addsub_output, a category of the model symbol addsub_output may be predefined as "component port variable", and a source of the model symbol addsub_output may be predefined as "AddSubstract.Output". The "source" may represent a correspondence among a model symbol, a model element, and a model component.

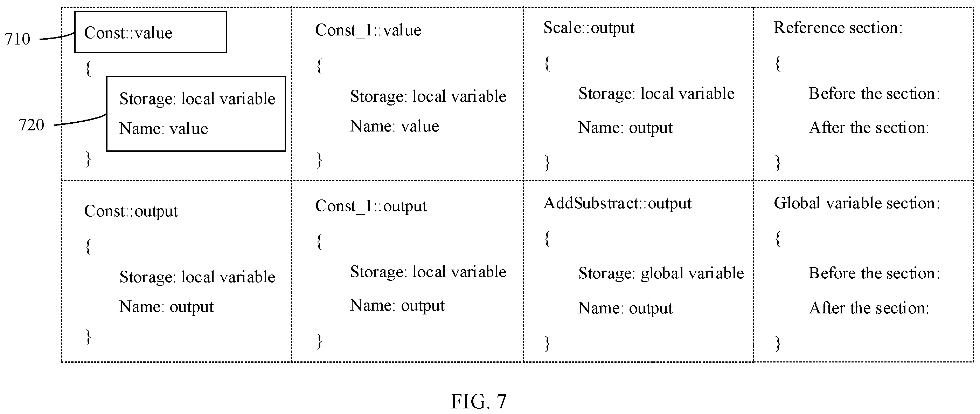

In some possible implementations, in a basic configuration file, configuration of the software behavior model uses one type of element as a basic unit for taking effect; and in a current configuration file, configuration in various aspects is detailed to each model element. FIG. 7 is a diagram of a current configuration file determined based on the model shown in FIG. 5, the model symbol definition table, and the basic configuration file of the model. The current configuration file includes one or more sub-configuration files (for example, content in each dashed box is one sub-configuration file), and each sub-configuration file corresponds to one model symbol. For example, content shown in block 710 indicates that the sub-configuration file includes configuration information of the model symbol const_value. In some possible implementations, when a name or a storage location of a code symbol, in the first preview code, corresponding to the model symbol const_value changes due to user configuration, a field corresponding to "Name" or "Storage" in the configuration file shown in FIG. 7 correspondingly changes to content configured by the user, namely, content shown in block 720 changes. It should be noted that the sub-configuration file may further include a modifier, an annotation, and user-defined content of the code symbol corresponding to the model symbol. In addition, in addition to the sub-configuration file corresponding to the model symbol, the current configuration file further includes a section configuration file, such as a reference section configuration file, a global variable section configuration file, a macro definition section configuration file, or a function section configuration file. The section configuration is mainly used to insert user-defined content before and after the section. Content before the section is placed at the beginning of the section, and content after the section is placed at the end of the section.

For example, an embedded C source file mainly includes a reference section (for example, 310 in FIG. 3), a global variable section (for example, 320 in FIG. 3), a macro definition section (for example, 330 in FIG. 3), a function section (for example, 340 in FIG. 3), and a record declarations section.

S402: Determine first configuration information in response to a first operation for the first symbol.

For example, the first operation for the first symbol may include at least one of the following: modifying a name of the first symbol, modifying a storage location of the first symbol, modifying a modifier of the first symbol, and inserting user-defined content before and/or after the first symbol.

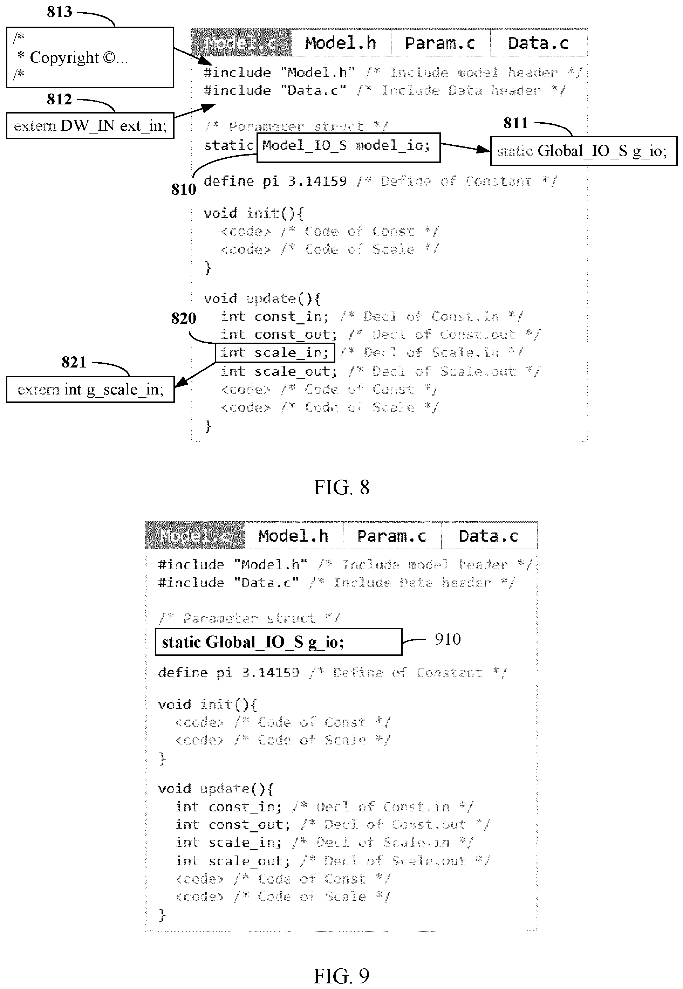

In an example, the first symbol is a code symbol "Model_IO_S" shown in 810 in FIG. 8. In this embodiment of this application, in response to a "delete-input" operation of the user, the name of the first symbol may be modified from "Model_IO_S" to "Global_IO_S" shown in 811. In other words, the user directly deletes "Model_IO_S" in the preview window, and re-enters "Global_IO_S", so that modification of the name of the first symbol can be completed. Alternatively, the first symbol is a code symbol "model_io" shown in 810 in FIG. 8. In this embodiment of this application, in response to a "delete-input" operation of the user, the name of the first symbol may be modified from "model_io" to "g_io" shown in 811. In other words, the user directly deletes "model_io" in the preview window, and re-enters "g_io", so that modification of the name of the first symbol can be completed. Further, after the modification, the preview window refreshes a result, as shown in FIG. 9, and block 910 displays a result after the name of the first symbol is modified.

It should be noted that after the name of the first symbol is modified, names of the first symbols at all reference points are updated.

In another example, the first symbol is a code symbol "Model_IO_S" or a code symbol "model_io" shown in 810 in FIG. 8. In this embodiment of this application, in response to an "input" operation of the user, the user-defined content may be inserted before a row in which the first symbol is located.

In still another example, the first symbol is a code symbol "int scale_in" shown in 820 in FIG. 8. In this embodiment of this application, in response to an "input" operation of the user, the first symbol may be modified from "int scale_in" to "extern int scale_in", and an original code symbol "scale_in" is changed from a local variable to a global variable, so that a storage location of the first symbol is changed. In some possible implementations, when a variable storage location is modified, a naming rule pre-specified by a system may need to be met. For example, if a global variable needs to be prefixed with "g_", when the first symbol is modified from a local variable "int scale_in" to a global variable, a name of an original code symbol also needs to be reconfigured. In other words, the first symbol is modified from "int scale_in" to "extern int g_scale_in" shown in 821. Correspondingly, "scale_in" of another reference point is also changed to "g_scale_in".

In yet another example, user-defined content may be inserted before or after a section. For example, in response to an "input" operation of the user, the user-defined content may be inserted before the global variable section, for example, "extern DW_IN ext_in" shown in 812. In other words, a global variable "ext_in" is defined. Alternatively, in response to an "input" operation of the user, the user-defined content may be inserted before the reference section, for example, copyright information "/* *Copyright (c)... */" shown in 813. It should be understood that, in response to an "input" operation of the user, user-defined information may be further inserted after the foregoing section, or the user-defined information may be inserted before or after another section.

It should be noted that, in response to the first operation for the first symbol, information of the first symbol in the current configuration file further needs to be modified, so that the code generator generates target language code based on the current configuration file. For example, the first configuration information may include a sub-configuration file corresponding to the first symbol, namely, modified information corresponding to the first symbol in the current configuration file, or may include a modified current configuration file.

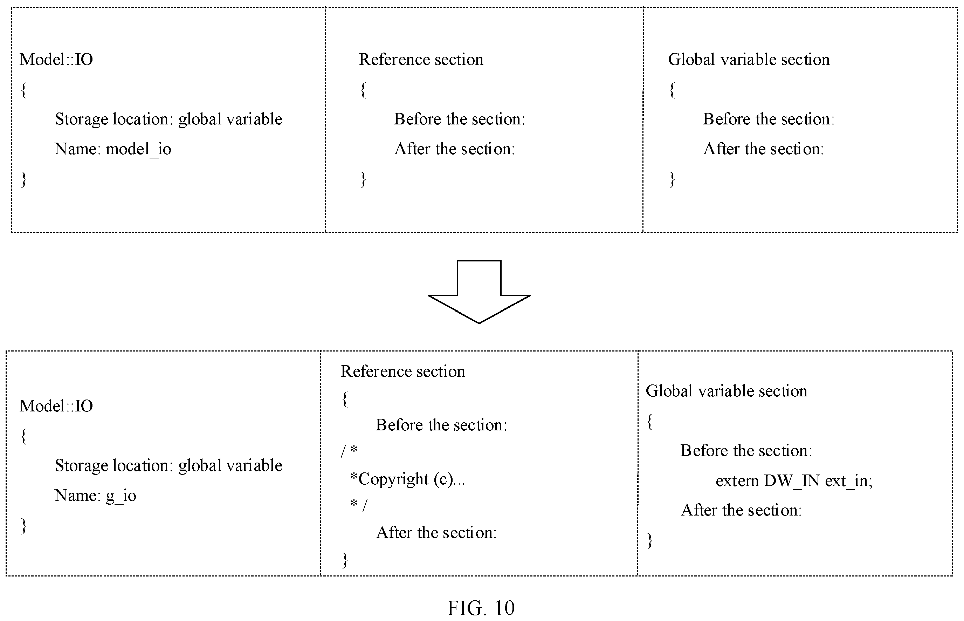

In an example, when the user modifies "model_io" to "g_io" in the preview window, as shown in FIG. 10, a field after "Name" in a configuration file corresponding to "model_io" changes from "model_io" to "g_io".

In another example, when the user modifies "int scale_in" to "extern int scale_in" in the preview window, correspondingly, a field after "Storage" in a configuration file corresponding to "scale_in" changes from "local variable" to "global variable".

In still another example, when the user-defined content is inserted before or after the section, the user-defined content is added to a field "Before the section" or "After the section" in the section configuration file. For example, when copyright information is inserted before the reference section, as shown in FIG. 10, a field "Before the section" in a configuration file corresponding to the reference section changes from a default value to "/* *Copyright (c)... */".

S403: Generate target language code based on the first configuration information.

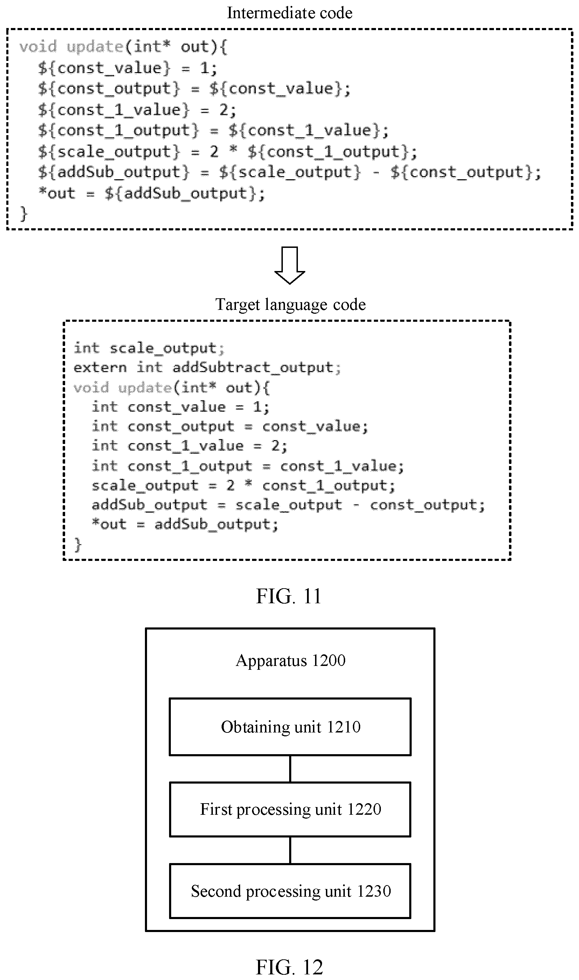

Further, the code generator generates the target language code based on the model symbol and the first configuration information. For example, the code generator first generates a set of intermediate code to reference the model symbol. Optionally, an intermediate code syntax rule is similar to a conventional high-level language syntax (such as the C language), but a specific reference form (such as ${identifier}) indicates that an identifier in code logic is a reference to the model symbol, as shown in FIG. 11. Further, the code generator translates, based on the current configuration file, the model symbol reference in the intermediate code into the target language code that meets the configuration.

In some possible implementations, if a model symbol of a minimum granularity level is not configured, the model symbol inherits a configuration of a model symbol of an upper layer.

According to the software configuration method provided in this embodiment of this application, a real-time code generation configuration method in which what you see is what you get is implemented, to help the user quickly complete code generation configuration. In this method, the preview code is displayed in the preview window, so that the user can directly configure the code in the obtained preview code, which helps the user quickly locate a problem point. After the user reconfigures the problem point, the preview code is refreshed in real time, so that the user can intuitively experience configuration effect, which helps resolve a problem that a configuration threshold of a code generation tool is high and configuration is not intuitive. The model symbol generated based on the software behavior model supports configuration modification of a single model symbol is supported and can avoid impact on another element of a same type.

It should be understood that the foregoing embodiment is described by using an MBD-based code generation procedure as an example. The software configuration method in this embodiment of this application is not limited to the MBD-based code generation procedure, and may be further applied to another code generation procedure based on model based design.

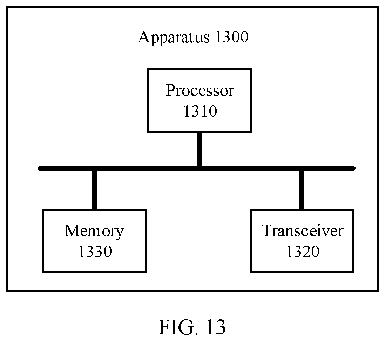

The method provided in embodiments of this application is described above in detail with reference to FIG. 3 to FIG. 11. With reference to FIG. 12 and FIG. 13, the following describes in detail apparatuses provided in embodiments of this application. It should be understood that descriptions of apparatus embodiments correspond to the descriptions of the method embodiments. Therefore, for content that is not described in detail, refer to the method embodiments. For brevity, details are not described herein again.

FIG. 12 is a block diagram of a software configuration apparatus 1200 according to an embodiment of this application. The apparatus 1200 includes an obtaining unit 1210, a first processing unit 1220, and a second processing unit 1230.

The apparatus 1200 may include a unit configured to perform the method in FIG. 4. In addition, the units in the apparatus 1200 and the foregoing other operations and/or functions are separately used to implement corresponding procedures in the method embodiment in FIG. 4.

Specifically, the obtaining unit 1210 is configured to obtain a software behavior model; the first processing unit 1220 is configured to: determine first preview code based on the software behavior model, where a first symbol of the first preview code corresponds to a first model element of the software behavior model; and determine first configuration information in response to a first operation for the first symbol; and the second processing unit 1230 is configured to generate target language code based on the first configuration information.

Optionally, the first operation includes at least one of the following: modifying a name of the first symbol; modifying a modifier of the first symbol; modifying a storage location of the first symbol; and inserting user-defined content before and/or after the first symbol.

Optionally, the first processing unit 1220 is further configured to: control, in response to a second operation for the first symbol, to display a correspondence between the first symbol and the first model element.

Optionally, the first processing unit 1220 is further configured to: control, in response to a third operation for the first symbol, to display information of the first symbol.

Optionally, the first processing unit 1220 is further configured to: generate a second symbol in response to the first operation; and control to display second preview code, and the second preview code includes the second symbol.

Optionally, the first preview code includes placeholder code, and the placeholder code represents a logical operation.

Optionally, the first processing unit 1220 is configured to: determine a model symbol based on the software behavior model, where the model symbol includes a first model symbol, and the first model symbol is determined based on the first model element; and determine the first preview code based on the model symbol and second configuration information of the software behavior model.

Optionally, the second configuration information includes first sub-configuration information of the first model symbol, and the first processing unit 1220 is further configured to: update the first sub-configuration information to second sub-configuration information based on the first operation; and determine the first configuration information based on the second sub-configuration information.

For example, the obtaining unit 1210 may be disposed in the generation configurator 220 shown in FIG. 2, the first processing unit 1220 may also be disposed in the generation configurator 220 shown in FIG. 2, and the second processing unit 1230 may be disposed in the code generator 230 shown in FIG. 2.

It should be understood that division into units of the foregoing apparatus is merely logical function division, and during actual implementation, all or some of the units may be integrated into a physical entity, or the units may be physically separated. In addition, the units in the apparatus may be implemented in a form of software invoked by a processor. For example, the apparatus includes a processor, the processor is connected to a memory, the memory stores instructions, and the processor invokes the instructions stored in the memory, to implement any one of the foregoing methods or implement functions of units in the apparatus. For example, the processor is a general-purpose processor, for example, a CPU or a microprocessor, and the memory is a memory in the apparatus or a memory outside the apparatus. Alternatively, the units in the apparatus may be implemented in a form of a hardware circuit, and the hardware circuit may be designed to implement functions of some or all of the units. The hardware circuit may be understood as one or more processors. For example, in an implementation, the hardware circuit is an application-specific integrated circuit (application-specific integrated circuit, ASIC), and a logical relationship between elements in the circuit is designed to implement the functions of some or all of the units. For another example, in another implementation, the hardware circuit may be implemented by using a programmable logic device (programmable logic device, PLD). A field programmable gate array (field programmable gate array, FPGA) is used as an example. The field programmable gate array may include a large quantity of logic gate circuits, and a connection relationship between the logic gate circuits is configured by using a configuration file, to implement the functions of some or all of the units. All the units of the foregoing apparatus may be implemented in the form of software invoked by the processor, or may be implemented in the form of the hardware circuit, or some of the units are implemented in the form of software invoked by the processor, and remaining units are implemented in the form of the hardware circuit.

In embodiments of this application, the processor is a circuit that has a signal processing capability. In an implementation, the processor may be a circuit that has an instruction reading and running capability, for example, a central processing unit (central processing unit, CPU), a microprocessor, a graphics processing unit (graphics processing unit, GPU) (which may be understood as a microprocessor), a digital signal processor (digital signal processor, DSP), or the like. In another implementation, the processor may implement a specific function by using a logical relationship of a hardware circuit. The logical relationship of the hardware circuit is fixed or reconfigurable. For example, the processor is a hardware circuit, for example, an FPGA, implemented by an ASIC or a PLD. In the reconfigurable hardware circuit, a process in which the processor loads a configuration document to implement hardware circuit configuration may be understood as a process in which the processor loads instructions to implement functions of some or all of the foregoing units. In addition, the circuit may be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU).

It can be learned that each unit in the foregoing apparatus may be one or more processors (or processing circuits) configured to implement the foregoing method, for example, a CPU, a GPU, an NPU, a TPU, a DPU, a microprocessor, a DSP, an ASIC, an FPGA, or a combination of at least two of these processor forms.

In addition, all or some of the units of the apparatus may be integrated, or may be implemented independently. In an implementation, the units are integrated together and implemented in a form of a system-on-a-chip (system-on-a-chip, SOC). The SOC may include at least one processor, configured to implement any one of the methods or implement functions of the units in the apparatus. Types of the at least one processor may be different, for example, the at least one processor includes a CPU and an FPGA, a CPU and an artificial intelligence processor, or a CPU and a GPU.

FIG. 13 is a block diagram of a software configuration apparatus according to an embodiment of this application. The software configuration apparatus 1300 shown in FIG. 13 may include a processor 1310, a transceiver 1320, and a memory 1330. The processor 1310, the transceiver 1320, and the memory 1330 are connected through an internal connection path. The memory 1330 is configured to store instructions. The processor 1310 is configured to execute the instructions stored in the memory 1330, so that the transceiver 1320 receives/sends some parameters. Optionally, the memory 1330 may be coupled to the processor 1310 by using an interface, or may be integrated with the processor 1310.

It should be noted that the transceiver 1320 may include but is not limited to a transceiver apparatus of an input/output interface (input/output interface) type, to implement communication between the apparatus 1300 and another device or a communication network.

The memory 1330 may be a read-only memory (read-only memory, ROM), a static storage device, a dynamic storage device, or a random access memory (random access memory, RAM).

The transceiver 1320 uses a transceiver apparatus, for example, but not limited to, a transceiver, to implement communication between the apparatus 1300 and another device or a communication network.

In some possible implementations, the apparatus 1300 may be disposed in the development platform 200 shown in FIG. 2.

An embodiment of this application further provides a computer program product. The computer program product includes computer program code, and when the computer program code is run on a computer, the computer is enabled to implement the method in embodiments of this application.

An embodiment of this application further provides a computer-readable storage medium. The computer-readable medium stores computer instructions, and when the computer instructions are run on a computer, the computer is enabled to implement the method in embodiments of this application.

An embodiment of this application further provides a chip. The chip includes a circuit, and is configured to perform the method in embodiments of this application.

In an implementation process, the steps in the foregoing method can be completed by using a hardware integrated logical circuit in the processor, or by using instructions in a form of software. The method disclosed with reference to embodiments of this application may be directly performed by a hardware processor, or may be performed by a combination of hardware and software modules in the processor. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing method in combination with hardware of the processor. To avoid repetition, details are not described herein.

It should be understood that, in embodiments of this application, the memory may include a read-only memory (read-only memory, ROM) and a random access memory (random access memory, RAM), and provide instructions and data for the processor.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on a particular application and a design constraint condition of the technical solutions. A person skilled in the art may use different methods to implement the described functions of each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiment. Details are not described herein again.

In the several embodiments provided in this application, it should be understood that the disclosed system, apparatus and method may be implemented in other manners. For example, the described apparatus embodiments are merely an example. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially or some of the technical solutions may be implemented in a form of a software product. The computer software product is stored in a storage medium and includes several instructions for instructing a computer device (which may be a personal computer, a server, a network device, or the like) to perform all or some of the steps of the method described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A software configuration method, comprising:
obtaining a software behavior model;
determining first preview code based on the software behavior model, wherein a first symbol of the first preview code corresponds to a first model element of the software behavior model;
determining first configuration information in response to a first operation for the first symbol; and
generating target language code based on the first configuration information.

2. The method according to claim 1, wherein the first operation comprises at least one of the following:
modifying a name of the first symbol;
modifying a modifier of the first symbol;
modifying a storage location of the first symbol; and
inserting user-defined content before and/or after the first symbol.

3. The method according to claim 1 or 2, wherein the method further comprises:
controlling, in response to a second operation for the first symbol, to display a correspondence between the first symbol and the first model element.

4. The method according to any one of claims 1 to 3, wherein the method further comprises:
controlling, in response to a third operation for the first symbol, to display information of the first symbol.

5. The method according to any one of claims 1 to 4, wherein the method further comprises:
generating a second symbol in response to the first operation; and
controlling to display second preview code, wherein the second preview code comprises the second symbol.

6. The method according to any one of claims 1 to 5, wherein the first preview code comprises placeholder code, and the placeholder code represents a logical operation.

7. The method according to any one of claims 1 to 6, wherein the determining first preview code based on the software behavior model comprises:
determining a model symbol based on the software behavior model, wherein the model symbol comprises a first model symbol, and the first model symbol is determined based on the first model element; and
determining the first preview code based on the model symbol and second configuration information of the software behavior model.

8. The method according to claim 7, wherein the second configuration information comprises first sub-configuration information of the first model symbol, and the determining first configuration information in response to a first operation for the first symbol comprises:
updating the first sub-configuration information to second sub-configuration information based on the first operation; and
determining the first configuration information based on the second sub-configuration information.

9. A software configuration apparatus, comprising:
an obtaining unit, configured to obtain a software behavior model;
a first processing unit, configured to: determine first preview code based on the software behavior model, wherein a first symbol of the first preview code corresponds to a first model element of the software behavior model; and determine first configuration information in response to a first operation for the first symbol; and
a second processing unit, configured to generate target language code based on the first configuration information.

10. The apparatus according to claim 9, wherein the first operation comprises at least one of the following:
modifying a name of the first symbol;
modifying a modifier of the first symbol;
modifying a storage location of the first symbol; and
inserting user-defined content before and/or after the first symbol.

11. The apparatus according to claim 9 or 10, wherein the first processing unit is further configured to:
control, in response to a second operation for the first symbol, to display a correspondence between the first symbol and the first model element.

12. The apparatus according to any one of claims 9 to 11, wherein the first processing unit is further configured to:
control, in response to a third operation for the first symbol, to display information of the first symbol.

13. The apparatus according to any one of claims 9 to 12, wherein the first processing unit is further configured to:
generate a second symbol in response to the first operation; and
control to display second preview code, wherein the second preview code comprises the second symbol.

14. The apparatus according to any one of claims 9 to 13, wherein the first preview code comprises placeholder code, and the placeholder code represents a logical operation.

15. The apparatus according to any one of claims 9 to 14, wherein the first processing unit is configured to:
determine a model symbol based on the software behavior model, wherein the model symbol comprises a first model symbol, and the first model symbol is determined based on the first model element; and
determine the first preview code based on the model symbol and second configuration information of the software behavior model.

16. The apparatus according to claim 15, wherein the second configuration information comprises first sub-configuration information of the first model symbol, and the first processing unit is further configured to:
update the first sub-configuration information to second sub-configuration information based on the first operation; and
determine the first configuration information based on the second sub-configuration information.

17. A software configuration apparatus, comprising:
a memory, configured to store a computer program; and
a processor, configured to execute the computer program stored in the memory, to enable the apparatus to perform the method according to any one of claims 1 to 8.

18. An electronic device, comprising the apparatus according to any one of claims 9 to 17.

19. A computer-readable storage medium, wherein the computer-readable storage medium stores instructions; and when the instructions are executed by a processor, the processor is enabled to implement the method according to any one of claims 1 to 8.

20. A chip, wherein the chip comprises a circuit, and the circuit is configured to perform the method according to any one of claims 1 to 8.
